# EUROPEAN PATENT SPECIFICATION

(11) **EP 1 129 839 B1**
(45) Date of publication and mention of the grant of the patent: **03.11.2004**
(21) Application number: 01301650.6
(22) Date of filing: 23.02.2001
(51) Int. Cl.: B29C 49/48, B60R 21/04

(54) **Hollow blow-moulded article, method of manufacturing such an article, and apparatus therefor**
Hohlförmiger blasgeformter Gegenstand; Herstellungsverfahren für solch einen Artikel und Vorrichtung zu dessen Herstellung
Article creux moulé par soufflage ; procédé de fabrication dudit article et dispositif pour sa fabrication

(30) Priority: 29.02.2000 JP 2000054898; 26.12.2000 JP 2000394056
(43) Date of publication of application: 05.09.2001
(73) Proprietor: Kyoraku Co.,Ltd., Tokyo 103-0024 (JP)
(72) Inventor: Iwasaki, Kenji, Nagoya City, Aichi prefecture, 452-0822 (JP)
(74) Representative: Loven, Keith James

(56) References cited:
- WO-A-93/18906
- US-A- 4 478 899
- PATENT ABSTRACTS OF JAPAN vol. 1997, no. 05, 30 May 1997 (1997-05-30) & JP 09 011321 A (KYORAKU CO LTD), 14 January 1997 (1997-01-14)
- PATENT ABSTRACTS OF JAPAN vol. 1998, no. 14, 31 December 1998 (1998-12-31) & JP 10 250513 A (KYORAKU CO LTD;NAGASE & CO LTD), 22 September 1998 (1998-09-22)
- PATENT ABSTRACTS OF JAPAN vol. 2000, no. 05, 14 September 2000 (2000-09-14) & JP 2000 043541 A (INOAC CORP), 15 February 2000 (2000-02-15)

## Description

### FIELD OF THE INVENTION

The present invention relates to a hollow article having excellent rigidity and impact absorption.

The hollow article of the invention may be used as a duct, panel, or housing for various applications such as air conditioners, dwelling facilities, furniture, electric household appliances, office equipment, automotive parts, etc.

### Background to the Invention

Dwelling facilities include bath and toiletry, wall, partition, panels, such as of entrance door, and indoor air conditioning ducts, and the furniture includes top plate of desk, partition panel, and bookshelf panels. The electric household appliances include housing of refrigerator and television. The office equipment includes housing of copying machine, and its door and panel. Automotive parts include console box lid, hood, door panel, and air conditioning duct.

Panels and ducts of dwelling facilities, furniture panel, housing of electric household appliances, housing of office equipment, and automotive parts are often required to have a high rigidity, and hollow articles used in such applications are manufactured in integral structures combining one wall and other wall by means of a rib linking mutually within a hollow space, and in particular in the case the appearance is important on both surfaces of face and back, the structure having the so-called "inner rib" is employed, that is, one wall and other wall are projected, in blow moulding, until a part of other wall contacts with one wall to be linked integrally within a hollow space.

In the automobile, for example, in order to assure the rigidity as product or protect the crew from impact of collision, an automotive roof side duct is disposed near both sides of ceiling as explained below (Japanese Patent Application Laid-Open No. 2000-43541).

The automobile industry is particularly interested in increasing the safety of vehicles, at least to comply with safety guidelines. For example, U.S. Federal Motor Vehicle Safety Standards (FMVSS) specify that hollow articles must have a minimum level of impact absorption. These guidelines are established under the U.S. Department of Transportation by the National Highway Traffic Safety Administration. There are various guidelines and requirements, including FMVSS 201 addressing occupant protection in interior impact, and others dealing with related topics, such as resistance to roof crushing. Head injuries are assessed according to 'head injury criteria' (HIC) that are obtained from the deceleration of the head during impact. These federal standards, which must be satisfied in order that a vehicle may enter the U.S. market, are continuously being updated as innovation and new features result in improved safety characteristics.

There are many studies that demonstrate that significant head injuries and trauma occur when the vehicle occupant's head strikes the interior roof or side panels. A rigid interior wall offers poor impact absorbing qualities when struck by a human head. A number of techniques are used to impart some shock absorbing qualities into the roof and interior panels, but strict government standards continue to demand greater safety thresholds. The use of ceiling air bags and structural modifications to the support elements are designed to address the impact absorbing qualities. However, issues such as cost and manufacturability tend to limit the widespread use of such features.

As shown in Fig. 11, the inner rib is integrally formed by blow moulding, in which an inside wall 101 facing a ceiling interior member 107 and an outside wall 102 facing an inner panel 106 of car body confront each other, and a flat impact absorbing rib 103 is disposed along the longitudinal direction in a space 110 between the inside wall 101 and outside wall 102. A general manufacturing method of this roof side duct is explained by referring to Fig. 12 and Fig. 13.

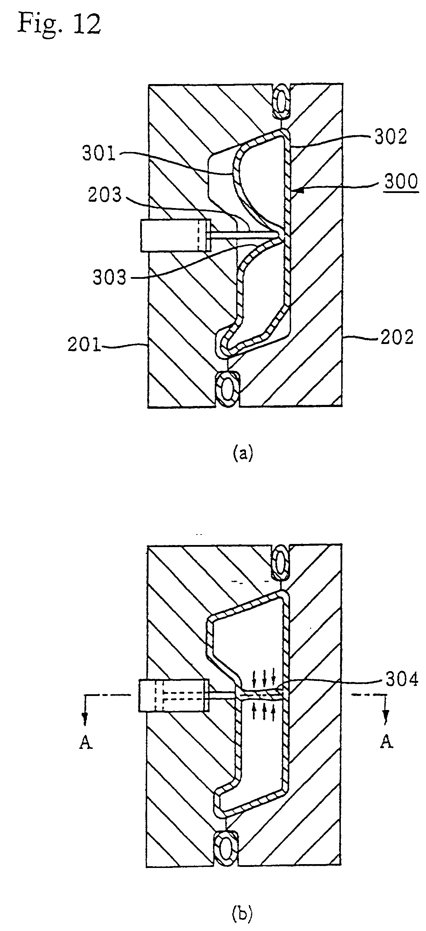

As shown in Fig. 12 (a), first, a molten parison 300 is poured into opened split moulds 201, 202, and then the moulds are closed. Next, a rib forming plate 203 is projected toward the other mould 202, and a neck 303 is formed in the area of forming one wall 301 of the parison, and its leading end is pressed tightly to the area of forming other wall 302. Later, as shown in Fig. 12 (b), the rib forming plate 203 is pulled in, compressed air is introduced into the parison 300, which is inflated into a shape along the cavity by the internal pressure of the compressed air, and the neck 303 is pressed and deformed in the direction of arrow, while confronting walls are fused integrally, so that an impact absorbing rib 304 is formed.

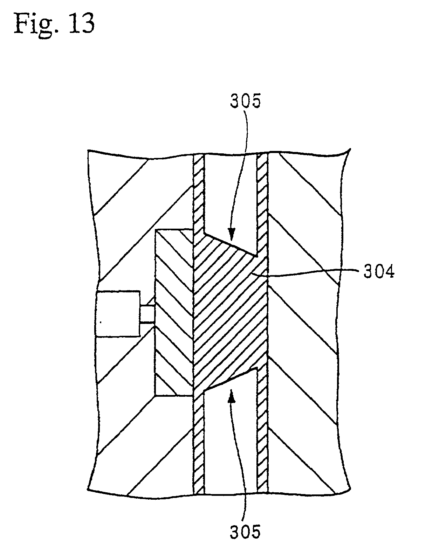

According to this prior art, as shown in Fig. 13, when pulling in the rib forming plate after projecting the rib forming plate and forming a neck at one wall side of the parison, the neck is dragged in the backward direction of the rib forming plate, or is elongated by the blow pressure in the blowing process, and the wall thickness and width of the flat rib formed as the confronting walls of the neck are compressed from both sides by internal pressure of the compressed air are decreased (that is, the inner rib is reduced in wall width. See the portion of numeral No. 305), and the shape, dimensions and wall thickness of the flat rib are not uniform on the whole. As a result, the rigidity and other mechanical strength of the impact absorbing rib 304 are lowered, and the duct having sufficient impact absorbing performance could not be presented.

What is needed is a hollow article with a rib of uniform shape, dimensions and wall width. The rib should have excellent mechanical strength and properties. In automobile use, the hollow article with the rib should have impact absorbing qualities to protect the driver and passengers. The manufacturing method for such an improved hollow article should be cost-effective and have a low defect rate.

US 4478899 (Mayumi Yoshishige et al) discloses apparatus for blow moulding a hollow article from a thermoplastic resin, the article having a pair of opposed walls and an integral rib extending from one wall to the other. The apparatus comprises a pair of split moulds including at least one slide core for forming a flat rib for linking the first and second walls integrally within the hollow article.

### SUMMARY OF THE INVENTION

The invention is devised in the light of the problems of the prior art described above, and it is hence an object thereof to realise a hollow article having an impact absorbing rib uniform in shape, dimensions and wall width on the whole, especially free from reduction of wall width of the inner rib, and large in rigidity and other mechanical strength, and excellent in impact absorbing performance.

To achieve the object, a hollow article in accordance with the invention is made of thermoplastic resin and comprising opposed first and second walls with a strengthening rib integrally formed therewith by blow moulding extending therebetween, the rib comprising a flat portion comprising four side edges, whereby a pair of the opposed side edges are respectively connected to the first and second wall, characterised in that the second pair of opposed side edges, which extend from the first wall to the second wall, comprise hollow section portions extending along said second opposing side edges.

The rib may project from one wall to be fused to the other wall, or it may comprise a first part protruding from the first wall and a second part protruding from the second wall, the opposed leading ends of the first and second parts being fused together.

A plurality of the strengthening ribs may be spaced apart within the hollow article.

The integral rib may be disposed along the longitudinal direction of the hollow article. The article of the invention is suitably an automobile component.

The invention also provides a method of manufacturing a hollow article of the type having opposed first and second walls with a strengthening rib integrally formed therewith and extending therebetween, the strengthening rib comprising four side edges, whereby a pair of the opposed side edges are respectively connected to the first and second wall and the second pair of opposed side edges extend from the first wall to the second wall, the method comprising providing a pair of split moulds including at least one slide core for forming a flat rib for linking said first and second walls in said hollow article, disposing a parison of thermoplastic resin between the split moulds and closing the moulds to clamp the parison therebetween with the or each slide core projecting from the mould to cause at least one portion of the wall of the parison to project inwardly towards and fuse with an opposed portion of the wall, drawing back the or each slide core while introducing fluid pressure into the parison to form the parison into a shape conforming with the surface of the mould cavity between the pair of split moulds and to press the side faces of the projecting wall together to fuse said faces, characterised by providing in the moulds a support core or cores to form a hollow section portion along each of the second pair of opposed edges of the flat rib extending between said opposed first and second walls of the hollow article.

The blowing fluid, preferably compressed air, may be fed into the parison while the support cores are projecting from the cavity surface. The support cores may be movable and may be arranged to retreat after the slide core. Alternatively, the support cores are fixed and project from each of the moulds. The support core preferably retreats after the slide core.

The invention further provides apparatus for blow moulding a hollow article from a thermoplastic resin, the article having a pair of opposed walls and an integral rib extending from one wall to the other, the apparatus comprising a pair of split moulds including at least one slide core for forming a flat rib for linking said first and second walls integrally within said hollow article, characterised in that a support core is disposed at each side of the slide core and adapted to form a hollow rib portion extending along the side of the flat rib portion.

The support core may be designed to draw back while projecting from the cavity surface or after withdrawal of the slide core.

The slide core is preferably treated with a fluoroplastic coating on the surface so as to slide smoothly on the parison.

Automobile components according to the present invention can comply with the U.S. FMVSS 201 regulations relating to head injury criteria (HIC). According to these regulations, the interior of a vehicle in the U.S. marketplace must have a HIC value of less than 1000. the value is determined by striking a dummy head of a certain mass into the relevant components of the vehicle interior at a certain speed, and measuring the shock value. The present invention results in an article that is well within the U.S. guidelines. In addition, the method of manufacturing of the present invention achieves a greater consistency and repeatability in the desired characteristics of the product as compared to the prior art products, which have a higher rate of failure of compliance and are generally unable to satisfy the HIC standards required by FMVSS 201. for example, tests have shown that roof side ducts in accordance with the prior art have a HIC value of approximately 1500, well above the 1000 threshold.

### BRIEF DESCRIPTION OF THE DRAWINGS

The present invention will be readily understood by the following detailed description in conjunction with the accompanying drawings, wherein like reference numerals designate like structural elements, and in which:

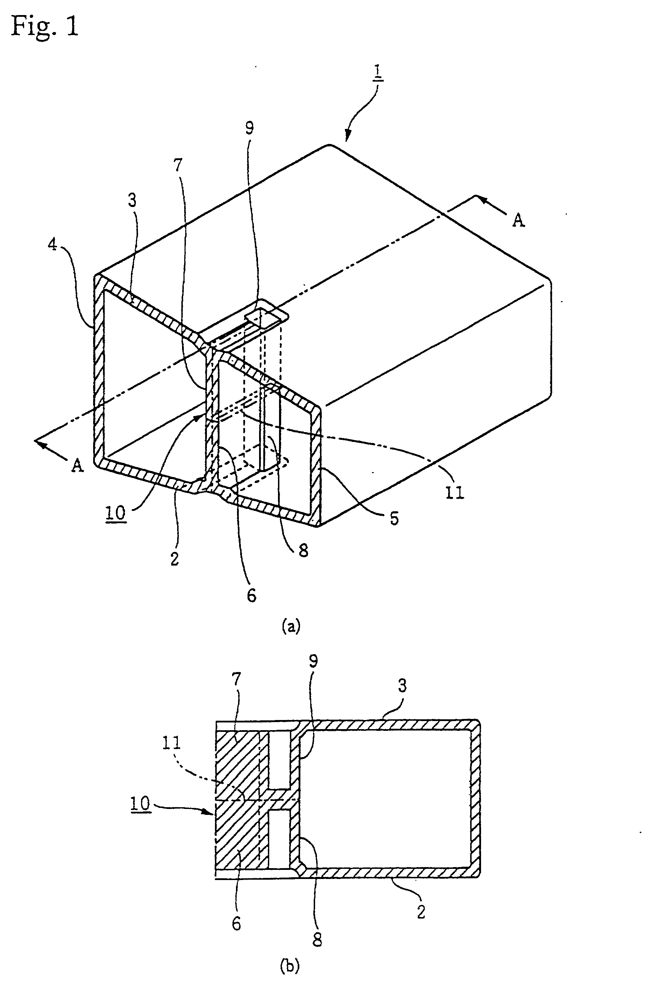

Fig. 1 shows a hollow article, for example an automobile component, according to a first embodiment of the invention, in which (a) is a schematic partial perspective view broken in the portion of impact absorbing rib, and (b) is a schematic partial sectional view along line A-A in (a);

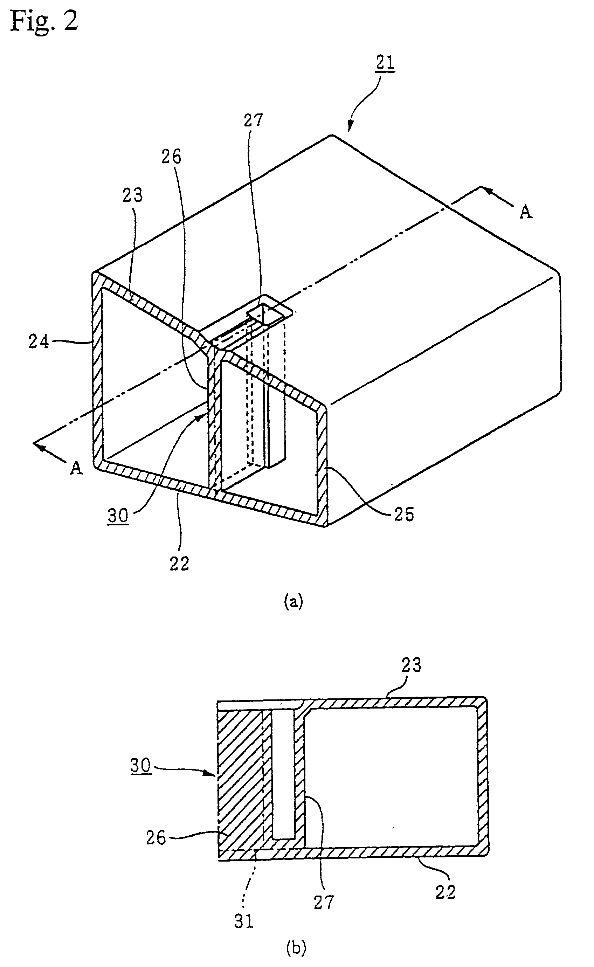

Fig. 2 shows a hollow article according to a second embodiment of the invention, in which (a) is a schematic partial perspective view broken in the portion of impact absorbing rig, and (b) is a schematic partial sectional view along line A-A in (a);

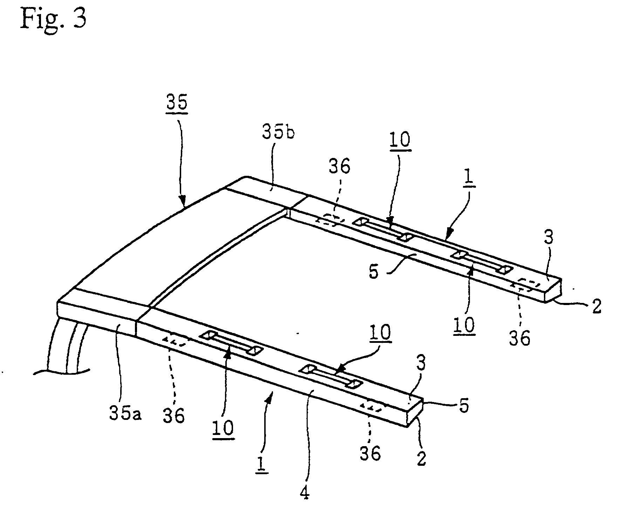

Fig. 3 is an explanatory diagram showing an example of the use of the hollow article of the invention as an automobile component;

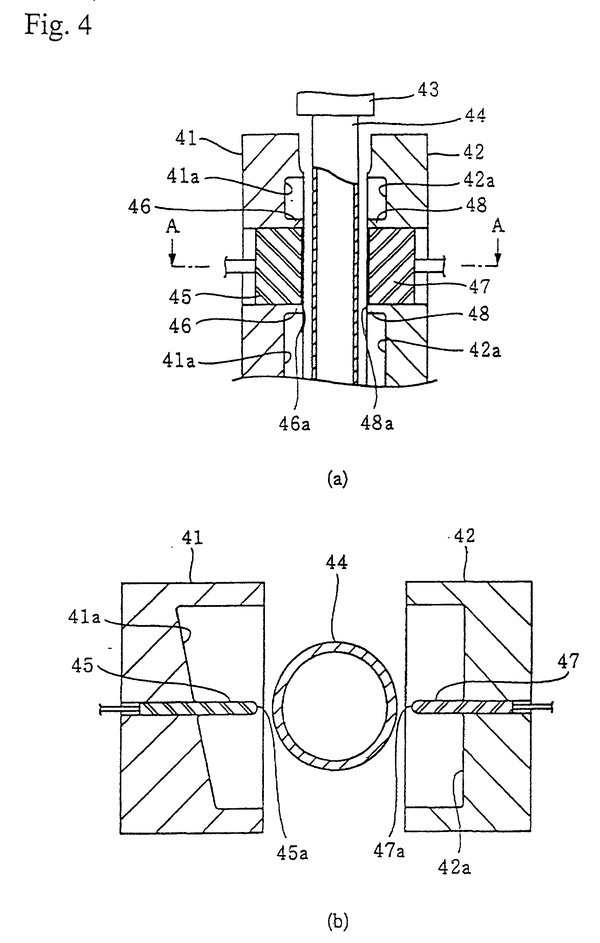

Fig. 4 shows a process in an example of a manufacturing method for the hollow article of the invention, in which (a) is an explanatory diagram showing a state of disposing parison between opened moulds, and (b) is a schematic sectional view along line A-A in (a);

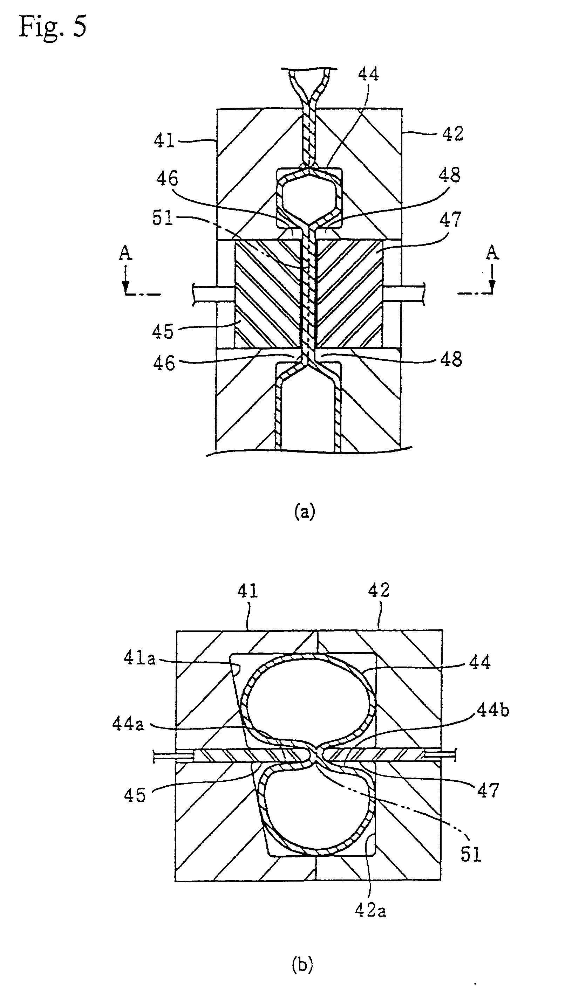

Fig. 5 shows a completely closed state of the moulds after the process shown in Fig. 4, in which (a) is a schematic partial sectional view along the axial direction of parison, and (b) is a schematic sectional view along line A-A in (a);

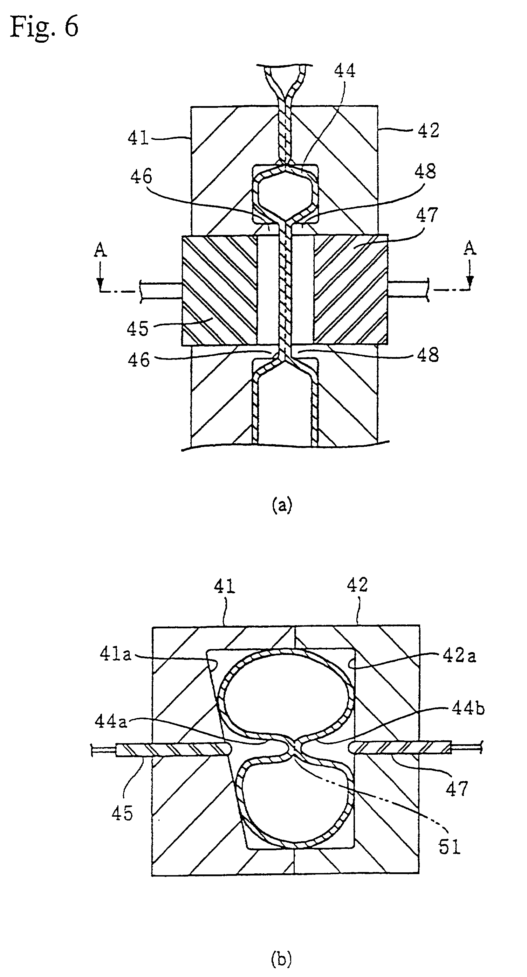

Fig. 6 shows a completely withdrawn state of the slide core after the process shown in Fig. 5, in which (a) is a schematic partial sectional view along the axial direction of parison, and (b) is a schematic sectional view along line A-A in (a);

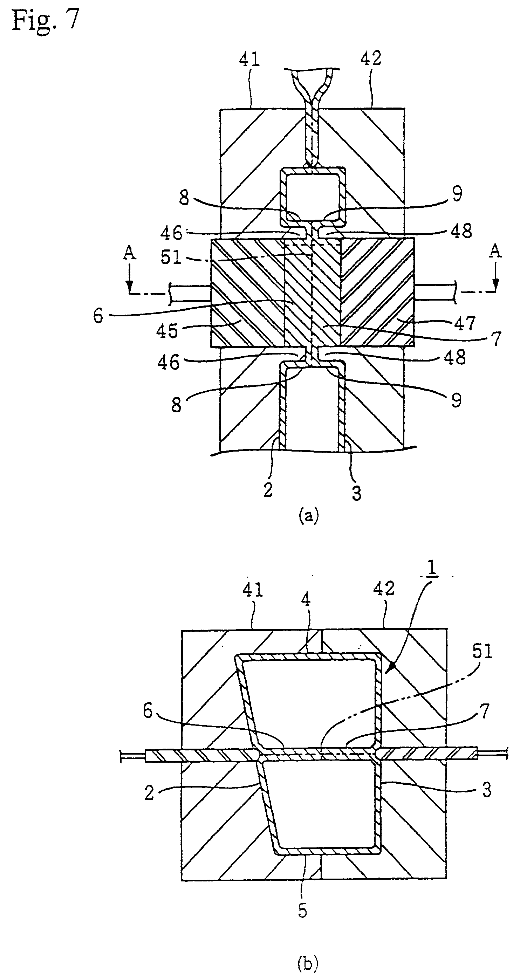

Fig. 7 shows the situation after full inflation with compressed air following the process shown in Fig. 6, in which (a) is a schematic partial sectional view along the axial direction of parison, and (b) is a schematic sectional view along line A-A in(a);

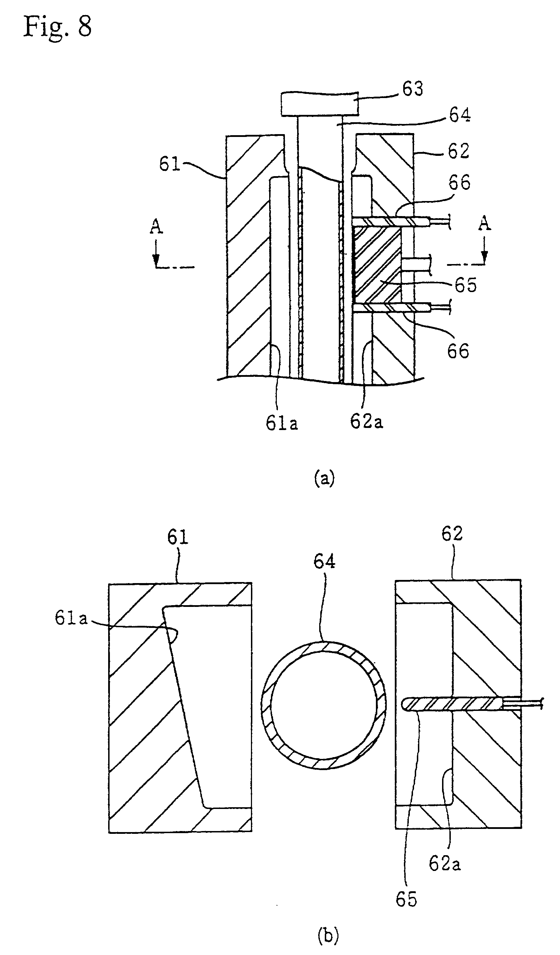

Fig. 8 shows a process in other example of manufacturing method of hollow article for automobile of the invention, in which (a) is an explanatory diagram showing a state of disposing parison between opened moulds, and (b) is a schematic sectional view along line A-A in (a);

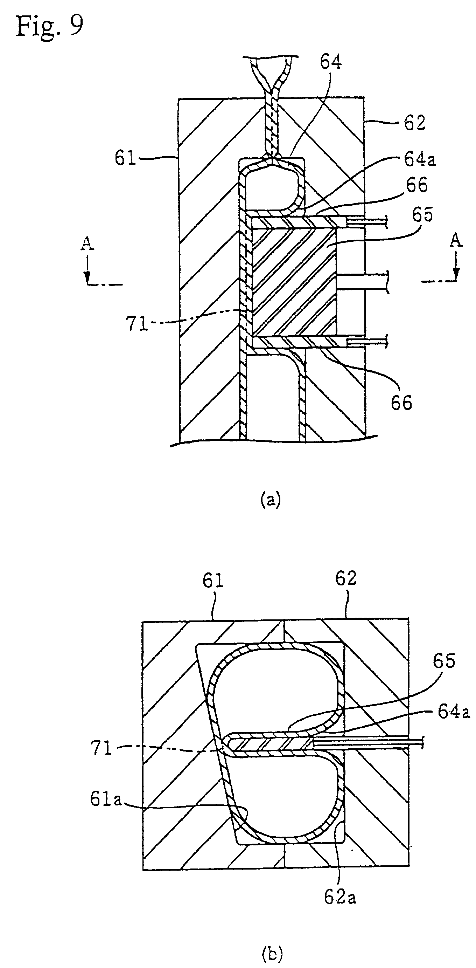

Fig. 9 shows a completely closed state of the moulds after the process shown in Fig. 8, in which (a) is a schematic partial sectional view along the axial direction of parison, and (b) is a schematic sectional view along line A-A in (a);

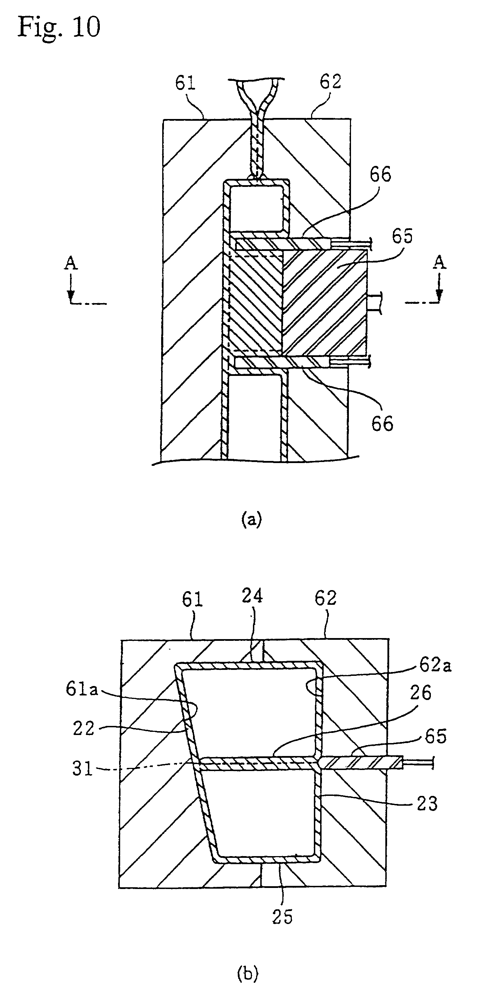

Fig. 10 shows the situation after full inflation with compressed air following the process shown in Fig. 9, in which (a) is a schematic partial sectional view along the axial direction of parison, and (b) is a schematic sectional view along line A-A in (a);

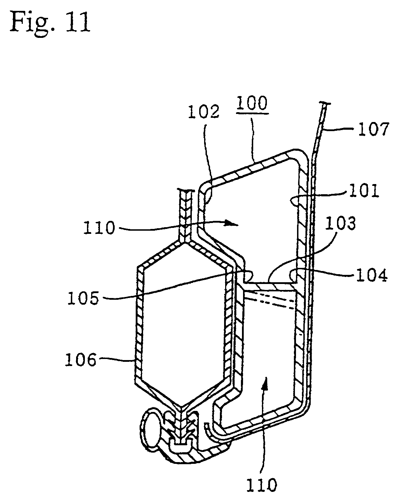

Fig. 11 is a schematic sectional view after installation of inner panel, showing a conventional roof side duct;
Fig. 12 shows a process of manufacturing method of the roof side duct shown in Fig. 11, in which (a) is a schematic sectional view showing a forming state of neck (concave part) in the parison by rib forming plate, and (b) is a schematic sectional view showing a state upon completion of introduction of compressed air; and
Fig. 13 is a schematic sectional view along line X-X in Fig. 12 (b).

### DETAILED DESCRIPTION OF THE ILLUSTRATED EMBODIMENTS

Referring first to Figure 1, the hollow article 1 is made of thermoplastic resin formed integrally by blow moulding, and includes one wall 2 and other wall 3 mutually confronting across a space in an impact acting direction, in which one wall 2 is inclined to other wall 3, and one side wall 4 and other side wall 5 formed consecutively to both side ends of the one wall 2 and other wall 3 confront nearly parallel to each other.

Between the one wall 2 and other wall 3, there is an impact absorbing rib 10 formed integrally by blow moulding, and this impact absorbing rib 10 includes leading ends of one flat rib 6 projecting from one wall 2 to other wall 3 and one concave rib 8 adjacent to both side ends of the one flat rib 6, and leading ends of other flat rib 7 projecting from other wall 3 to one wall 2 and other concave rib 9 adjacent to both side ends of the other flat rib 7, which are integrated through a fusion portion 11.

Referring now to Figure 2, the hollow article 21, again suitably an automobile component, is made of thermoplastic resin formed integrally by blow moulding, and includes one wall 22 and other wall 23 mutually confronting across a space in an impact acting direction, in which one wall 22 is inclined to other wall 23, and one side wall 24 and other side wall 25 formed consecutively to both side ends of the one wall 22 and other wall 23 confront nearly parallel to each other.

Between the one wall 22 and other wall 23, there is an impact absorbing rib 30 formed integrally by blow moulding, and this impact absorbing rib 30 includes leading ends of a flat rib 26 projecting from other wall 23 to one wall 22 and a concave rib 27 adjacent to both side ends of the flat rib 26, and inside of one wall 22, which are integrated through a fusion portion 31.

In the invention, the thermoplastic resin for composing the hollow article is not particularly limited as far as blow moulding is applicable, but particularly preferred examples include high density polyethylene, medium density polyethylene, polypropylene, modified polyphenylene oxide, polycarbonate, polyamide, and ABS resin.

The impact absorbing rib made of flat rib and concave rib adjacent to both side ends of the flat rib is not limited to one piece as shown in the embodiment, but two or more impact absorbing ribs may be disposed as required at a mutual spacing.

Further, the sectional shape of the hollow article is not limited to the trapezoidal shape as shown in the embodiment as far as having mutually confronting one wall and other wall, and may be formed in square, rectangle, parallelogram or other arbitrary shape depending on the application.

The hollow article of the invention may be used in automobile damper, hood, door, console box lid, air conditioning duct, and other interior and exterior parts.

Below is explained an example of applying the hollow article shown in Fig. 1 in the air conditioning duct for automobile disposed at both sides of car compartment ceiling.

As shown in Fig. 3, the hollow article 1 disposed at both sides of the car compartment ceiling has two impact absorbing ribs 10 as mentioned above disposed at an interval along the longitudinal direction, and one end side communicates with junctions 35a, 35b disposed at both sides of a connection duct 35 disposed at the rear side, and other end side is closed. One wall 2 and other side wall 5 face the inside of the compartment, and other wall 3 and other side wall 5 face the car body side, and a discharge port 36 is provided at a position not forming the impact absorbing rib 10 of one wall 2.

The air conditioning air supplied from the air conditioner not shown in the diagram through the connection duct 35 is discharged toward the crew through a passage of the hollow article for automobile formed at both sides of the impact absorbing rib 10, from the discharge port 36, so that the compartment can be air conditioned uniformly. At the time of car crash, when the head of a crew member collides secondarily against the one wall 2, this impact is absorbed by the impact absorbing rib 10 having a sufficient impact absorbing performance, and the safety of the crew is assured.

The HIC value for the article in accordance with the present invention was found to be approximately 800, well within the guidelines established by the U.S. FMVSS 201. Prior art hollow articles tested had a HIC value above the 1000 limit set by FMVSS 201. In addition, among the advantages of the present invention are repeatability, reliability and consistency of the hollow articles. Prior art hollow section articles tend to have a much greater variability in thickness and other dimensions of the impact absorbing rib, affecting the head injury criteria.

An example of a manufacturing method for the hollow article of the invention is explained below.
(1) As shown in Fig. 4 (a), (b), one mould 41 and other mould 42 are opened in a state of support cores 46, 48 and slide cores 45, 47 of the one mould 41 and other mould 42 projecting to a position where the leading ends 45a, 47a thereof may be nearly flush with leading ends 46a, 48a of the support cores 46, 48.
   Herein, the one mould 41 includes a cavity 41 a for defining the outer surface of nearly half of the one wall 2 side of the hollow article 1, the slide core 45 for forming one flat rib 6, and a pair of support cores 46 for forming one convex rib 8 disposed adjacently to both side ends of one flat rib 6. By contrast, the other mould 42 includes a cavity 42a for defining the outer surface of the remaining portion of the other wall 3 side of the hollow article 1, the slide core 47 for forming other flat rib 7, and a pair of support cores 48 for forming other convex rib 9 disposed adjacently to both side ends of other flat rib 7.
   The support cores not limited to the illustrated example, but retractable support cores like retractable support cores 66 shown below in Fig. 8 may be also used.
(2) After step (1), a parison 44 made of fused thermoplastic resin is extruded from an extrusion head 43 of an extruder not shown in the diagram, and is poured into the opened moulds 41, 42, and then the moulds are closed.
   As the moulds are being closed, as shown in Fig. 5 (a), (b), the one wall side of the parison 44 is pushed and deformed by the slide core 45 and support core 46 of the one mould 41 and one recess 44a is formed, while the other wall side of the parison 44 is pushed and deformed by the slide core 47 and support core 48 of the other mould 42 and other recess 44b is formed, and when the moulds are completely closed, the leading end of one recess 44a and leading end of other recess 44b are fused, and a fusion portion 51 is formed.
(3) After step (2), the slide cores 45, 47 are pulled in as shown in Fig. 6 (a), (b).
   In this case, both sides of one recess 44a and other recess 44b are fixed at positions protracted by the support cores 46, 48, and only the slide cores 45, 47 are drawn back, and therefore as the slide cores 45, 47 are pulled in, the recesses 44a, 44b formed in the parison 44 are not dragged.
(4) After step (3), blowing means such as a blow needle (not shown in the diagram) is poked into the parison 44, and compressed air is injected to expand the parison, as shown in Fig. 7 (a), (b), into a shape along the outer surface of the cavities 41a, 42a and support cores 46, 48, and the side faces of the wall facing the recesses 44a, 44b are pressed and deformed by internal pressure of the compressed air, thereby compressing tightly and fusing together.
   As a result, the confronting one wall 2 and other wall 3 are disposed at an interval in the impact action direction, and between the one wall 2 and other wall 3, the leading ends of the one flat rib 6 projecting from one wall 2 to other wall 3 and the one concave rib 8 adjacent to both side ends of one flat rib 6, and the leading ends of the other flat rib 7 projecting from other wall 3 to one wall 2 and the other concave rib 9 adjacent to both side ends of other flat rib 7 are integrated through the fusion portion 11, thereby completing the impact absorbing rib 10.
(5) After step (4), cooling in the moulds 41, 42, and opening the moulds, the hollow article 1 is taken out, and any flash is removed.

Another example of the manufacturing method of the hollow article for automobile of the invention is explained below.
(1) As shown in Fig. 8 (a), (b), one mould 61 and other mould 62 are opened in a state of slide core 65 and support core 66 of the one mould 61 and other mould 62 retracted to a shown position.
   Herein, the one mould 61 includes a cavity 61a for defining the outer surface of nearly half of the one wall 22 side of the hollow article for automobile 21. By contrast, the other mould 62 includes a cavity 62a for defining the outer surface of the remaining portion of the other wall 23 side of the hollow article for automobile 21, the slide core 65 for forming a flat rib 26, and a pair of support cores 46 for forming a convex rib 27 disposed adjacently to both side ends of the flat rib 26. The pair of support cores 46 are formed retractably to one mould 61.
   The support cores not limited to the illustrated retractable example, but may be disposed integrally in other mould 62.
(2) After step (1), a parison 64 made of molten thermoplastic resin is extruded from an extrusion head 63 of an extruder not shown in the diagram, and is located between the opened moulds 61, 62, and then the moulds are closed.
   As the moulds are being closed, or after a slight time delay, the slide core 65 and support core 66 project toward the other mould 66, as shown in Fig. 9 (a), (b), and the one wall side of the parison 64 is pushed and deformed and a recess 64a is formed, then the leading end of the recess 64a is fused to the inner surface of the other wall side of the parison, and a fusion portion 71 is formed.
(3) After step (2), while the support core 66 is projecting, only the slide core 65 is pulled in.
   In this case, as the slide core 65 is pulled in, the recess 64a formed in the parison 64 is not dragged.
(4) After step (3), blow means such as a blow needle (not shown in the diagram) is inserted into the parison 64, and compressed air is injected in to inflate the plastics material, as shown in Fig. 9 (a), (b), into a shape along the outer surface of the cavities 61 a, 62a and support core 66, and the wall surface facing the recess 64a is pressed and deformed by internal pressure of the compressed air, thereby compressing tightly.
   As a result, the confronting one wall 62 and other wall 63 are disposed at an interval in the impact action direction, and between the one wall 62 and other wall 63, the leading ends of the flat rib 26 projecting from one wall 62 to other wall 63 and the concave rib 27 adjacent to both side ends of the flat rib 26 are integrated through the fusion portion 71 on the inner surface from other wall 63, thereby completing the impact absorbing rib 30.
(5) After step (4), cooling in the moulds, and opening the moulds, the hollow article for automobile 21 is taken out, and deflashed.

In the manufacturing method of hollow article according to the invention, the surface of the slide core retractably disposed in the mould may be covered with a coating layer made of fluoroplastic resin which is easy to slide on the parison. This coating layer of fluoroplastic resin may be formed firmly by roughening the surface of the slide core and then applying a coating layer of fluoroplastic resin on this surface.

The coating layer is not limited to a thin layer of fluoroplastic resin, but may be also formed by co-deposition of fluoroplastic resin and plating solution such as electroless nickel in a treating solution, and applying and baking the treating solution on the surface of the slide core. Or the coating layer may be also prepared by forming an electroless nickel coating on the surface of the slide core, and impregnating fluoroplastic resin in this electroless nickel coating.

The hollow article of the invention is especially suitable for automobile use, since an impact absorbing rib made of flat rib and concave rib disposed adjacently to both side ends of the flat rib is integrally formed between the confronting first and second walls which are spaced apart in an impact action direction, an impact absorbing rib uniform in shape, dimensions and wall thickness on the whole is integrally formed by blow moulding. As a result, a hollow article for automobile having an excellent impact absorbing performance is obtained.

While reference is made throughout to the use of compressed air as the blowing medium, it will be appreciated that other fluids may be used, for example nitrogen gas.

## Claims

1. A hollow article(1, 21) made of thermoplastic resin and comprising opposed first (2, 22) and second (3, 23) walls with a strengthening rib (10, 30) integrally formed therewith by blow moulding extending therebetween, the rib comprising a flat portion (6, 26) comprising four side edges, whereby a pair of the opposed side edges are respectively connected to the first (2, 22) and second (3, 23) wall, **characterised in that** the second pair of opposed side edges, which extend from the first (2, 22) wall to the second (3, 23) wall, comprise hollow section portions (8, 9, 27) extending along said second opposing side edges.

2. A hollow article (1, 21) according to Claim 1, wherein the rib (10, 30) projects from one wall (2, 22) and is fused (31) to the opposite wall (3, 23).

3. A hollow article (1, 21) according to Claim 1, wherein the rib (10, 30) comprises a first part (6) protruding from the first wall (2) and a second part (7) protruding from the second wall (3), the opposed leading ends of the first and second parts being fused together (11 ).

4. A hollow article (1, 21) according to any one of Claims 1 to 3, comprising a plurality of said strengthening ribs (10, 30) spaced apart therein.

5. An automobile component, comprising a hollow article (1, 21) according to any preceding claim.

6. A method of manufacturing a hollow article (1, 21) of the type having opposed first (2, 22) and second (3, 23) walls with a strengthening rib (10, 30) integrally formed therewith and extending therebetween, the strengthening rib (10, 30) comprising four side edges, whereby a pair of the opposed side edges are respectively connected to the first (2, 22) and second (3, 23) wall and the second pair of opposed side edges extend from the first wall (2, 22) to the second wall (3, 23), the method comprising providing a pair of split moulds (41, 42, 61, 62) including at least one slide core (45, 47, 65) for forming a flat rib (6, 7, 26) for linking said first (2, 22) and second (3, 23) walls in said hollow article (1, 21), disposing a parison (44, 64) of thermoplastic resin between the split moulds (41, 42, 61, 62) and closing the moulds to clamp the parison therebetween with the or each slide core (45, 47) projecting from the mould (41, 42) to cause at least one portion of the wall of the parison (44, 64) to project inwardly towards and fuse (51, 71) with an opposed portion of the wall, drawing back the or each slide core (45, 47, 65) while introducing fluid pressure into the parison to form the parison into a shape conforming with the surface (41a, 42a, 61a, 62a) of the mould cavity between the pair of split moulds (41, 42, 61, 62) and to press the side faces of the projecting wall together to fuse said faces, **characterised by** providing in the moulds a support core or cores (46, 48, 66) to form a hollow section portion along each of the second pair of opposed edges of the flat rib extending between said opposed first (2, 22) and second (3, 23) walls of the hollow article (1, 21).

7. A method according to Claim 6, wherein the support cores (46, 48, 66) are movable.

8. A method according to Claim 7, wherein fluid pressure is introduced into the parison (44, 64) while the support core (46, 48, 66) is projecting from the cavity surface.

9. A method according to Claim 8, wherein the support core (46, 48, 66) retreats after the slide core (45, 47, 65).

10. A method according to Claim 6, wherein the support cores (46, 48, 66) are fixed to and project from each of said moulds (41, 42, 61, 62).

11. Apparatus for blow moulding a hollow article (1, 21) from a thermoplastic resin, the article having a pair of opposed walls (2, 3, 22, 23) and an integral rib (10, 30) extending from one wall to the other, the apparatus comprising a pair of split moulds (41, 42, 61, 62) including at least one slide core (45, 47, 65) for forming a flat rib (6, 7, 26) for linking said first (2, 22) and second (3, 23) walls integrally within said hollow article (1, 21), **characterised in that** a support core (46, 48, 66) is disposed at each side of the slide core (45, 47, 65) and adapted to form a hollow rib (9, 27) portion extending along the side of the flat rib portion.

12. Apparatus according to Claim 11, wherein the support core (46, 48, 66) is designed to draw back while projecting from the cavity surface or after withdrawal of the slide core (45, 47, 65).

13. Apparatus according to Claim 11 or 12, wherein said slide core (45, 47, 65) is treated with a low-friction film coating on the surface so as to slide smoothly on a parison (44, 64).

## Patentansprüche

1. Hohler Gegenstand (1, 21) aus thermoplastischem Kunstharz umfassend gegenüberliegende erste (2, 22) und zweite (3, 23) Wände mit einer sich zwischen diesen erstreckenden und mit diesen durch Blasformen integral ausgebildeten Verstärkungsrippe (10, 30), wobei die Rippe einen flachen Abschnitt (6, 26) mit vier Seitenkanten aufweist, von denen ein Paar gegenüberliegender Seitenkanten je mit der ersten (2, 22) und zweiten (3, 23) Wand verbunden sind, **dadurch gekennzeichnet, dass** das zweite Paar gegenüberliegender Seitenkanten, die sich von der ersten Wand (2, 22) zu der zweiten Wand (3, 23) erstrecken, hohle Teilabschnitte (8, 9, 27) umfasst, die sich entlang der zweiten gegenüberliegenden Seitenkanten erstrecken.

2. Hohler Gegenstand (1, 21) nach Anspruch 1, bei dem die Rippe (10, 30) von einer Wand (2, 22) vorsteht und mit der gegenüberliegenden Wand (3, 23) verschmolzen (31) ist.

3. Hohler Gegenstand (1, 21) nach Anspruch 1, bei dem die Rippe (10, 30) einen von der ersten Wand (2) abstehenden ersten Teil (6) und einen von der zweiten Wand (3) abstehenden zweiten Teil (7) aufweist, wobei die führenden Enden der ersten und zweiten Teile miteinander verschmolzen sind (11).

4. Hohler Gegenstand (1, 21) nach einem der Ansprüche 1 bis 3, umfassend eine Vielzahl von Verstärkungsrippen (10, 30), die in diesem voneinander beabstandet sind.

5. Fahrzeugkomponente, umfassend einen hohlen Gegenstand (1, 21) nach einem der vorgenannten Ansprüche.

6. Verfahren zur Herstellung eines hohlen Gegenstands (1, 21) des Typs mit gegenüberliegenden ersten (2, 22) und zweiten (3, 23) Wänden und einer sich zwischen diesen erstreckenden und mit diesen integral ausgebildeten Verstärkungsrippe (10, 30), wobei die Verstärkungsrippe (10, 30) vier Seitenkanten aufweist, von denen ein Paar gegenüberliegender Seitenkanten je mit der ersten (2, 22) und zweiten (3, 23) Wand verbunden sind und das zweite Paar gegenüberliegender Seitenkanten sich von der ersten Wand (2, 22) zu der zweiten Wand (3, 23) erstreckt, wobei das Verfahren umfasst: Bereitstellen eines Paars geteilter Formen (41, 42, 61, 62) mit zumindest einem Gleitkern (45, 47, 65) zur Formung einer flachen Rippe (6, 7, 26) zur Verbindung der ersten (2, 22) und zweiten (3, 23) Wände in dem hohlen Gegenstand (1, 21), Einbringen eines Vorformlings (44, 64) aus thermoplastischem Kunstharz zwischen die getrennten Formen (41, 42, 61, 62) und Schließen der Formen zum Einklemmen des Vorformlings zwischen diesen mit dem oder jedem der Gleitkerne (45, 47), der bzw. die von der Form (41, 42) vorstehen, um zumindest einen Abschnitt der Wand des Vorformlings (44, 64) nach innen vorspringen zu lassen und mit einem gegenüberliegenden Abschnitt der Wand zu verschmelzen (51, 71), Zurückziehen des oder eines jeden Gleitkerns (45, 47, 65), wobei ein Fluiddruck in den Vorformling eingebracht wird, um den Vorformling in eine der Oberfläche (41a, 42a, 61a, 62a) des Formhohlraums zwischen den getrennten Formen (41, 42, 61, 62) angepasste Form zu bringen und die Seitenflächen der vorspringenden Wand zusammenzudrücken, um die Flächen zu verschmelzen, **gekennzeichnet durch** Bereitstellen eines Stützkerns oder von Stützkernen (46, 48, 66) in den Formen zur Ausbildung eines hohlen Teilabschnitts entlang eines jeden der zweiten Paare gegenüberliegender Seitenränder der flachen Rippe, der sich zwischen den gegenüberliegenden ersten (2, 22) und zweiten (3, 23) Wänden des hohlen Gegenstands (1, 21) erstreckt.

7. Verfahren nach Anspruch 6, bei dem die Stützkerne (46, 48, 66) bewegbar sind.

8. Verfahren nach Anspruch 7, bei dem der Fluiddruck in den Vorformling (44, 64) eingebracht wird, während der Stützkern (46, 48, 66) von der Formhohlraumoberfläche vorsteht.

9. Verfahren nach Anspruch 8, bei dem der Stützkern (46, 48, 66) nach dem Gleitkern (45, 47, 65) zurückgezogen wird.

10. Verfahren nach Anspruch 6, bei dem die Stützkerne (46, 48, 66) an jeder der Formen (41, 42, 61, 62) angebracht sind und von diesen vorstehen.

11. Vorrichtung zum Blasformen eines hohlen Gegenstands (1, 21) aus einem thermoplastischen Kunstharz, wobei der Gegenstand ein Paar gegenüberliegender Wände (2, 3, 22, 23) aufweist, sowie eine integrale Rippe (10, 30), die sich von der einen zu der anderen Wand erstreckt, wobei die Vorrichtung umfasst: ein Paar getrennter Formen (41, 42, 61, 62) mit zumindest einem Gleitkern (45, 47, 65) zur Ausbildung einer flachen Rippe (6, 7, 26) zur integralen Verbindung der ersten (2, 22) und zweiten (3, 23) Wände innerhalb des hohlen Gegenstands (1, 21), **dadurch gekennzeichnet, dass** ein Stützkern (46, 48, 66) an jeder Seite des Geitkerns (45, 47, 65) angeordnet und zur Ausbildung eines sich entlang der Seite des flachen Rippenabschnitts erstreckenden hohlen Rippeabschnitts (9, 27) konfiguriert ist.

12. Vorrichtung nach Anspruch 11, bei der der Stützkern (46, 48, 66) derart konfiguriert ist, um zurückgezogen zu werden, während dieser von der Formhohlraumfläche vorsteht oder nachdem der Gleitkern (45, 47, 65) zurückgezogen worden ist.

13. Vorrichtung nach Anspruch 11 oder 12, bei der der Gleitkern (45, 47, 65) an der Oberfläche mit einer reibungsmindernden Filmbeschichtung versehen ist, um weich an einem Vorformling (44, 64) zu gleiten.

## Revendications

1. Article creux (1, 21) fait de résine thermoplastique et comprenant des première (2, 22) et seconde (3, 23) parois opposées avec une nervure de renforcement (10, 30) formée d'un seul tenant avec elles par extrusion-soufflage s'étendant entre elles, la nervure comprenant une partie plate (6, 26) comprenant quatre bordures latérales, les deux bordures d'une paire de bordures latérales opposées étant connectées respectivement à la première (2, 22) et à la seconde paroi (3, 23), **caractérisé par le fait que** les deux bordures de la seconde paire de bordures latérales opposées, qui s'étendent de la première (2, 22) paroi à la seconde paroi (3, 23), comprennent des parties de section creuse (8, 9, 27) s'étendant le long desdites secondes bordures latérales opposées.

2. Article creux (1, 21) selon la revendication 1, dans lequel la nervure (10, 30) se projette à partir d'une paroi (2, 22) et est réunie par fusion (31) à la paroi opposée (3, 23).

3. Article creux (1, 21) selon la revendication 1, dans lequel la nervure (10, 30) comprend une première partie (6) faisant saillie à partir de la première paroi (2) et une seconde partie (7) faisant saillie à partir de la seconde paroi (3), les extrémités antérieures opposées des première et seconde parties étant réunies ensemble par fusion (11).

4. Article creux (1, 21) selon l'une quelconque des revendications 1 à 3, comprenant une pluralité desdites nervures de renforcement (10, 30) espacées entre elles dans celui-ci.

5. Composant d'automobile, comprenant un article creux (1, 21) tel que défini à l'une quelconque des revendications précédentes.

6. Procédé de fabrication d'un article creux (1, 21) du type de ceux ayant des première (2, 22) et seconde (3, 23) parois opposées avec une nervure de renforcement (10, 30) formée d'un seul tenant avec elles et s'étendant entre elles, la nervure de renforcement (10, 30) comprenant quatre bordures latérales, les deux bordures d'une paire de bordures latérales opposées étant connectées respectivement à la première (2, 22) et à la seconde paroi (3, 23), et les deux bordures de la seconde paire de bordures latérales opposées s'étendant de la première paroi (2, 22) à la seconde paroi (3, 23), le procédé comprenant les opérations consistant à prendre une paire de moules à coins (41, 42, 61, 62) comprenant au moins un noyau glissant (45, 47, 65) pour former une nervure plate (6, 7, 26) pour relier lesdites première (2, 22) et seconde (3, 23) parois dans ledit article creux (1, 21), disposer une préforme (44, 64) de résine thermoplastique entre les moules à coins (41, 42, 61, 62) et fermer les moules pour serrer la préforme entre eux avec le ou chaque noyau glissant (45, 47) se projetant à partir du moule (41, 42) pour amener au moins une partie de la paroi de la préforme (44, 64) à se projeter intérieurement vers et à se réunir par fusion (51, 71) avec une partie opposée de la paroi, retirer le ou chaque noyau glissant (45, 47, 65) tout en introduisant une pression de fluide dans la préforme pour façonner la préforme en une forme épousant la surface (41a, 42a, 61a, 62a) de la cavité du moule entre la paire de moules à coins (41, 42, 61, 62) et pour comprimer ensemble les faces latérales de la paroi en saillie afin de réunir par fusion lesdites faces, **caractérisé par** la disposition dans les moules d'un noyau ou de noyaux de support (46, 48, 66) pour former une partie de section creuse le long de chacune des bordures de la seconde paire de bordures opposées de la nervure plate s'étendant entre lesdites première (2, 22) et seconde (3, 23) parois opposées de l'article creux (1, 21).

7. Procédé selon la revendication 6, dans lequel les noyaux de support (46, 48, 66) sont mobiles.

8. Procédé selon la revendication 7, dans lequel la pression de fluide est introduite dans la préforme (44, 64) alors que le noyau de support (46, 48, 66) est en cours de projection à partir de la surface de la cavité.

9. Procédé selon la revendication 8, dans lequel le noyau de support (46, 48, 66) se retire après le noyau glissant (45, 47, 65).

10. Procédé selon la revendication 6, dans lequel les noyaux de support (46, 48, 66) sont fixés à et se projettent à partir de chacun desdits moules (41, 42, 61, 62).

11. Appareil pour mouler par extrusion-soufflage un article creux (1, 21) à partir d'une résine thermoplastique, l'article ayant une paire de parois opposées (2, 3, 22, 23) et une nervure (10, 30) d'un seul tenant s'étendant d'une paroi à l'autre, l'appareil comprenant une paire de moules à coins (41, 42, 61, 62) comprenant au moins un noyau glissant (45, 47, 65) pour former une nervure plate (6, 7, 26) pour relier lesdites première (2, 22) et seconde (3, 23) parois d'un seul tenant à l'intérieur dudit article creux (1, 21), **caractérisé par le fait qu'**un noyau de support (46, 48, 66) est disposé de chaque côté du noyau glissant (45, 47, 65) et adapté pour former une partie de nervure creuse (9, 27) s'étendant le long du côté de la partie de nervure plate.

12. Appareil selon la revendication 11, dans lequel le noyau de support (46, 48, 66) est agencé pour se retirer alors qu'il se projette à partir de la surface de la cavité ou après retrait du noyau glissant (45, 47, 65).

13. Appareil selon l'une des revendications 11 ou 12, dans lequel ledit noyau glissant (45, 47, 65) est traité par un revêtement de film à faible frottement sur la surface de façon à glisser doucement sur une préforme (44, 64).
